# EUROPEAN PATENT SPECIFICATION

(11) **EP 0 450 786 B1**
(45) Date of publication and mention of the grant of the patent: **28.10.1998**
(21) Application number: 91302280.2
(22) Date of filing: 18.03.1991
(51) Int. Cl.: G06K 9/52, G07C 9/00, A61B 5/117, G06K 9/00

(54) **Fingerprint characterisation technique**
Technik zur Charakterisierung von Fingerabdrücken
Technique de caractérisation d'empreintes digitales

(30) Priority: 21.03.1990 GB 9006370
(43) Date of publication of application: 09.10.1991
(73) Proprietor: CENTRAL RESEARCH LABORATORIES LIMITED, Hayes, Middlesex, UB3 1HH (GB)
(72) Inventor: Sibbald, Alastair, Maidenhead, Berkshire SL6 1XL (GB)
(74) Representative: Marsh, Robin Geoffrey

(56) References cited:
- WO-A-89/03099
- US-A- 3 413 602
- US-A- 3 944 978
- US-A- 3 968 476

## Description

The present invention relates to techniques for the characterisation of fingerprints. The invention has particular, although not exclusive relevance, to such techniques for use in access control systems, in which the fingerprint of a person seeking access to, for example, premises or a bank account, is compared with recorded data identifying the fingerprint of an authorised person.

The invention is concerned with techniques in which relative movement of finger print patterns is used for recognition purposes and typical examples of techniques of this kind hitherto are described in US Patent Number 4,414,684 and GB Patent Number 1,506,611.

The former patent specification discloses a fingerprint characterization technique which uses a photodetector to detect coincidence between a recorded optical representation of a fingerprint and the moving projection of an actual fingerprint which is caused to scan in x and y directions through the recorded optical representation on to the photodetector.

The latter patent specification discloses an automatic opto-mechanical image comparator which utilises a similar technique to determine whether a pair of images of a fingerprint are derived from the same fingerprint. In this latter system, when an identical pair of fingerprint images is used, light parts of one of the images coincide directly with the light parts of the other image (similarly for dark parts) when the two images are directly superposed and mutually aligned, resulting in a maximum value of transmission or reflection of light through or from the superposed pair of images. Alternatively, if one of the images is "polarity-reversed" (e.g. a negative of the image is used, rather than a positive), then a minimum value of transmission or reflection occurs when the two images are identical and coincident.

There are several major drawbacks with techniques such as the proposals described above, particularly for use in an access control system.

In order to be commercially viable, access control systems should ideally be of low cost and high reliability.

Prior art systems, such as those described above, require access to a large library of fingerprint reference images, because they make an optical comparison between these and an image of the fingerprint under consideration. In order to create and store a reference image of any particular fingerprint for use by the aforementioned prior art systems, it is necessary to use optical (e.g. photographic) means. If electrical storage of the image is preferred, then a very large amount of data storage and processing is required. At the present time, "domestic" quality CCD-type television cameras are just adequate for acquiring fingerprint images with reasonable resolution, and these possess, typically, 370 x 410 pixels (i.e. 151,700 pixels). This large amount of data cannot be easily stored on, for example, a magnetic card stripe.

In order to carry out the optical comparison operation, complex opto-mechanical mechanisms are required, and the time taken to carry out a single comparison adequately is relatively substantial (tens of seconds). All of these considerations militate against the commercial acceptability of such prior art systems.

A further drawback of many prior fingerprint recognition systems is that the image-matching processes are very sensitive to uncertainties in both the position and orientation of the individual images. Systems of the types referred to above, which utilise methods of superimposing a fingerprint image sequentially onto a series of recorded images and monitoring the optical transmittance (or reflectance) of the superimposed pair, demand almost perfect image registration and hence only a very small margin of error in both orientation and positioning of the fingerprint to be analysed can be tolerated. A further requirement of such a system would be the ability to tolerate unavoidable minor differences between a preferred print and its previously recorded image, caused, for example, by scars or dirt on a finger, or by plastic deformation of the skin during acquisition of the recorded image or the preferred image for matching.

A fingerprint characterization technique for use in an access control system which is both reliable and inexpensive is an attractive proposition. It is therefore an object of the present invention to provide a method of characterising fingerprints and, in particular, a technique which is suitable for use in an access control system.

Methods and apparatuses for fingerprint verification in which global or local properties such as ridge orientation and/or spacing are determined so as to obtain a reduced feature set are known from US-A-3968476, WO-A-89/03099 and US-A-3944978.

The use of autocorrelation features for optical character recognition is known from US-A-3 413 602.

The invention is set out in independent claim 1.

An autocorrelation pattern is generated when two identical images are superimposed. The autocorrelation pattern is dependent not only on the nature of the original image, but also on the relative spatial positioning of the two images as defined by (a) the modulus, and (b) argument of the vector between a common reference point on each image; and (c) the relative angular displacement (orientation) between the two images.

Preferably the displacement distance (modulus of the displacement vector) of the fingerprint images for generation of the autocorrelation pattern is approximately one-half of the mean inter-ridge spacing of the fingerprint pattern. This is desirable so as to achieve maximum contrast in the autocorrelation pattern produced.

The autocorrelation pattern of the fingerprint may be conveniently divided into quadrants, the light intensity profiles generated by the autocorrelation process within each quadrant being measured as the autocorrelation displacement vector argument is caused to vary. The data so generated may be displayed in graphical form if desired. A quadrant photodiode may be conveniently employed to measure the light intensity profiles.

The technique and apparatus may suitably be used for the purpose of access control.

The invention will now be described by way of example only, with reference to the following drawings of which:
Figure 1 illustrates the effects of superimposing two simple geometric patterns;
Figure 2 illustrates the image of a fingerprint and its division into quadrants;
Figure 3 shows the modulus and argument of the mutual displacement vector of a superimposed image pair;
Figure 4 shows schematic representations of autocorrelation patterns of the image of the fingerprint illustrated in Figure 2;
Figure 5 illustrates a plot of the standardised autocorrelation intensity patterns of Figure 4 against the vector rotation (0° to 150° in 30° increments) on a quadrant by quadrant basis;
Figure 6 shows schematically a plot of the standardised intensity patterns of the fingerprint shown in Figure 4 against the vector rotation on a quadrant-by-quadrant basis in which the filled circle markers indicate the mean of thirty independent samples, and the upper and lower bounds represent +2 and -2 standard deviations about the mean;
Figure 7 shows schematically a similar plot to that of Figure 6, except reprsenting a different fingerprint;
Figure 8 illustrates schematically statistical comparisons between the data represented in Figures 6 and 7, and;
Figure 9 shows alternative methods of representing autocorrelation data.

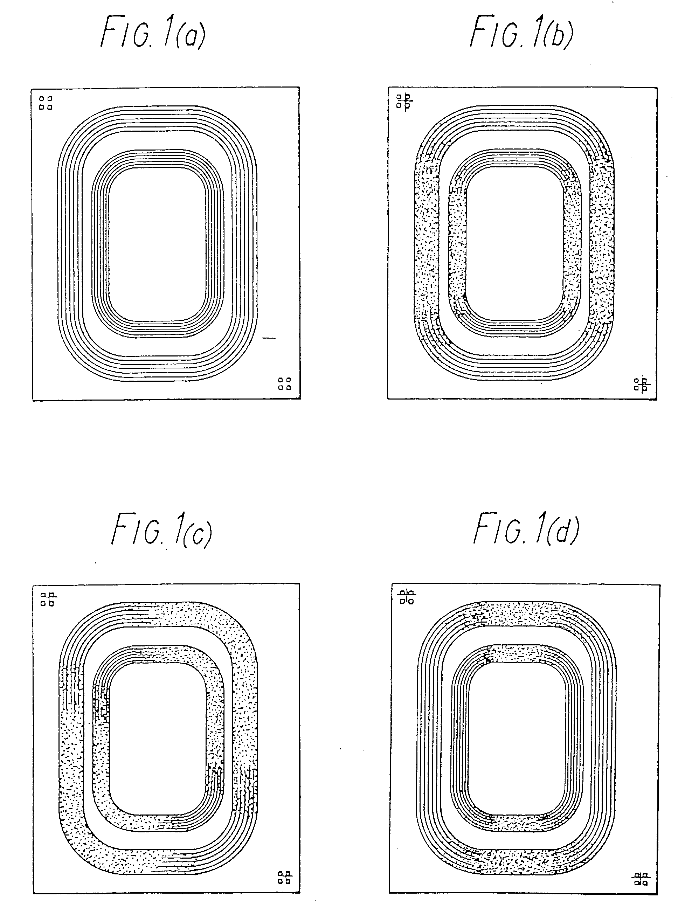

Considering firstly Figure 1, a simple geometric pattern is shown which represents a fingerprint. The pattern is superimposed directly on to an exact copy of itself as shown in Figure 1(a). Relative displacement of the two images is effected in the image plane and may be ascertained by inspection of the alignment marks of the four squares lowermost image and a cross (Figures 1(b),(c),(d)) in the upper left and lower right hand corners of each image pair (Figures 1(a),(b),(c),(d)).

If the two images are mutually displaced, such that the displacement distance is one-half of the inter-ridge spacing of the "fingerprint" pattern, then "dark" lines on the second image which run parallel to the displacement direction will be unaffected, but "dark" lines on the second image which run perpendicular to the displacement direction will then overlie "light" inter-line spaces on the first image, thereby creating a new "dark" area; an interference "domain".

Figure 1a shows the basic geometrical pattern. Figure 1b shows the two superimposed patterns with a small, horizontal relative displacement to the right. Figure 1c shows the two patterns superimposed with small, upwards and right relative displacements. Figure 1d shows the two patterns superimposed with a small upwards relative displacement. It will be noticed from Figures 1b, 1c and 1d that areas where the lines are perpendicular to the direction of displacement become dark, whilst areas where there are lines parallel to the direction of displacement remain unchanged.

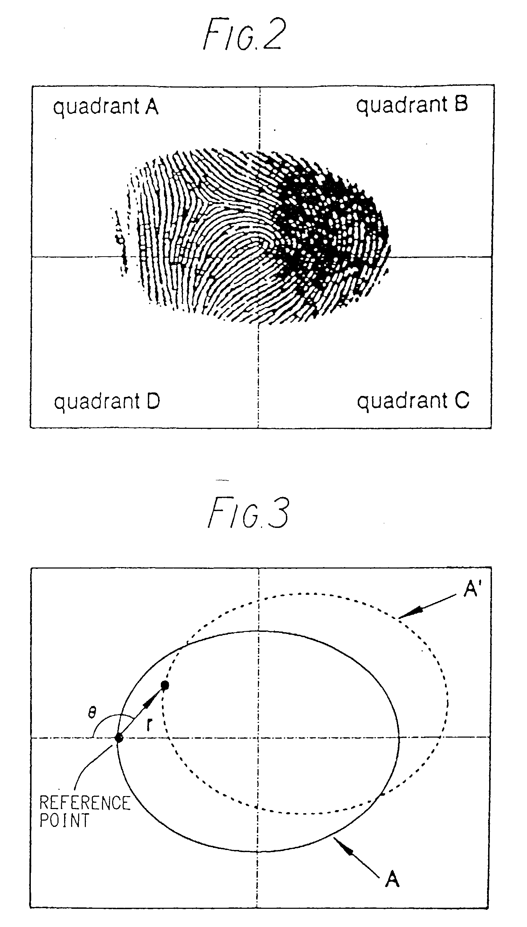

Figure 2 illustrates a representation of an image of an actual fingerprint, and it will be seen that such an image consists mainly of many curved, parallel lines possessing different orientations. An autocorrelation pattern achieved as described above will always contain a number of dark interference areas (domains) for any particular mutual displacement direction and distance: this forms the basis for producing data indicative of the autocorrelation pattern. It will be appreciated that, although it is referenced to the original orientation, the autocorrelation pattern obtained is entirely orientation-independent.

It will also be seen that Figure 2 represents the image of the fingerprint divided into quadrants a,b,c and d.

This is done for convenience of assimilation of data indicative of the autocorrelation patterns.

With reference now to Figure 3, it will be seen that the fingerprint image of Figure 2 is shown only in outline for the purpose of clarity.

If the argument (θ) of a mutual displacement vector (modulus r) is varied such that the two superimposed images (A,A') are displaced cyclically in a periodic manner whilst maintaining constant mutual orientation in the plane, then the resulting interference patterns change in a periodic manner, related to the local angular orientation of the ridges of the fingerprint.

This periodic variation of local intensities of the autocorrelation pattern is characteristic of the autocorrelation pattern of the fingerprint images and so the fingerprint pattern itself can be characterized by recording these intensity variations.

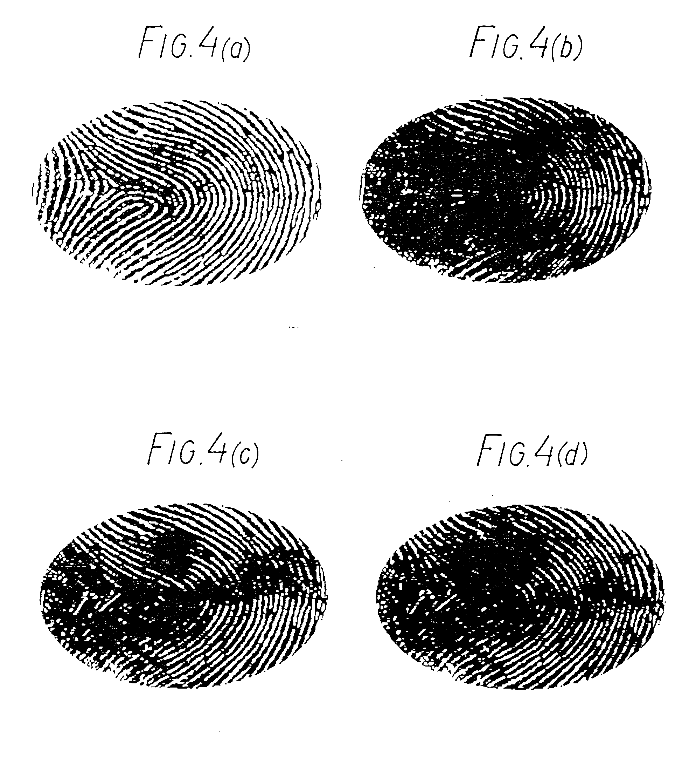

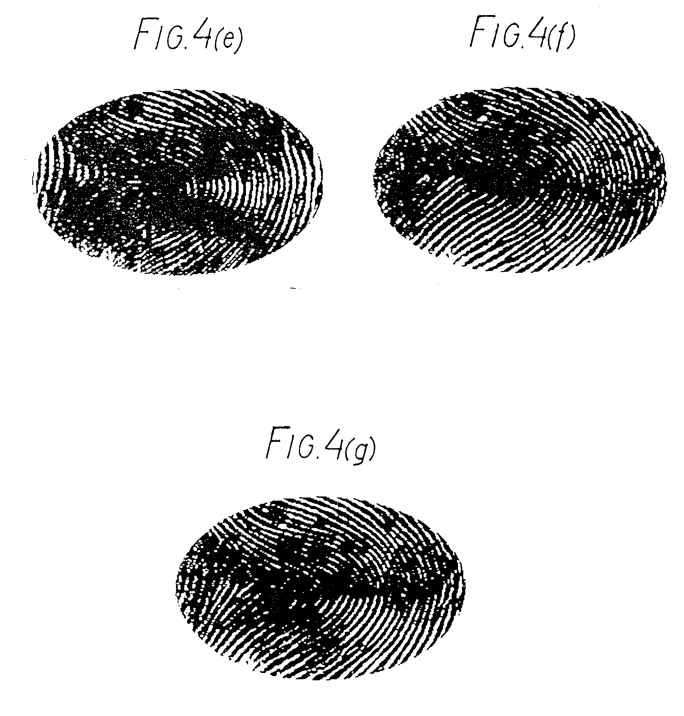

Figures 4 show such resulting autocorrelation patterns, the modulus (θ) varying by 30° increments from 0°- 150° between each pattern.

Figure 4(a) shows an image directly superimposed on itself with no mutual displacement.

Figure 4(b) shows an autocorrelation pattern having a displacement argument of 0° and a displacement modulus of r.

Figure 4(c) shows an autocorrelation pattern having a displacement argument of 30° and a displacement modulus of r, and so on until;

Figure 4(g) shows an autocorrelation pattern having a displacement argument of 150° and a displacement modulus of r.

It will be appreciated that if the displacement modulus r is equal to one-half the mean fingerprint inter-ridge spacing, then maximum contrast in the resulting autocorrelation pattern will be achieved.

Thus by rotation of the displacement vector as depicted in Figure 3, light intensity variations of the two superimposed images A,A' will be observed in each of the four quadrants A,B,C and D. These variations at each quadrant may also be recorded at regular angular increments, eg, 30°.

The magnitude of the four resultant intensity profiles obtained at each displacement may be stored giving, in this example, an overall profile comprising 24 measurements (4 quadrants, 6 measurements per quadrant). This expedient significantly compresses the data, especially when compared with the data to be stored and processed by prior art electronic systems, which typically are required to test for matching images containing more than 150,000 pixels. The much smaller quantity of data produced by the technique in accordance with the present invention may easily be stored on, for example, a magnetic card stripe or bar code or the like.

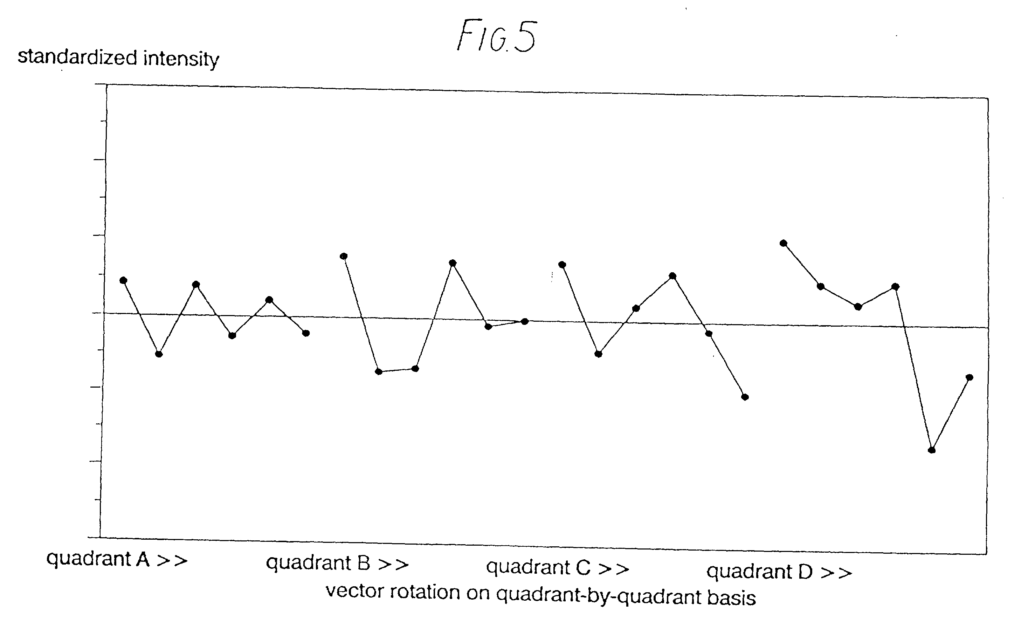

Figure 5 illustrates a plot of the 24 intensity measurements achieved above. The results shown, however, have been standardised. This has been effected on a quadrant profile basis by (in each case) evaluating the mean intensity value of the data samples in each quadrant profile and subtracting that mean value from each of the individual sample values in that quadrant.

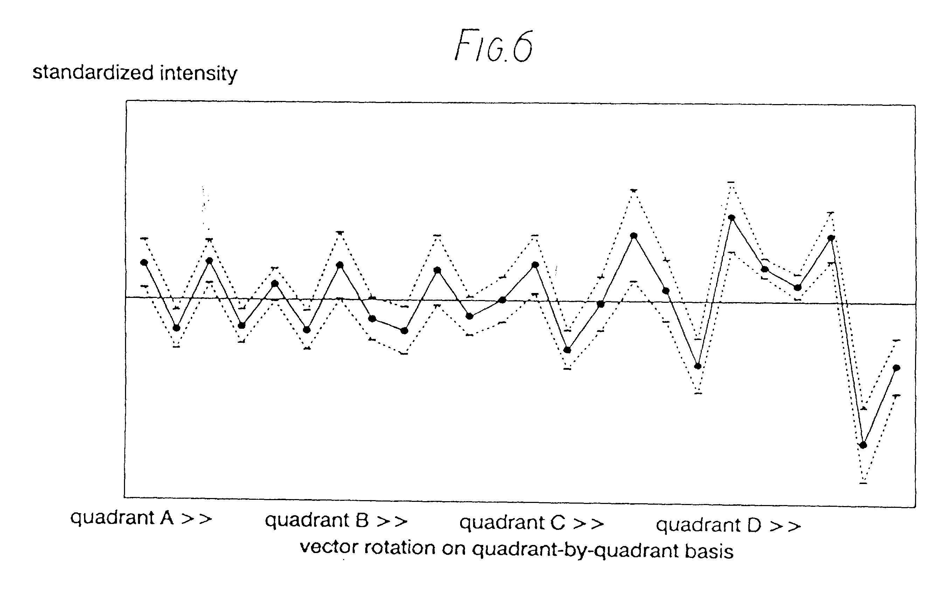

Figure 6 illustrates a plot of the 24 standardised intensity values of Figure 5, overlain by a confidence interval of ±2 standard deviations (±2 S.D.s), for 30 independent samples of prints taken from the same finger. This has been done in order to show the reproducibility of the autocorrelation technique in respect of fingerprints deriving from a single finger over 30 independent sample measurements.

Once the confidence interval has been established, it is possible to assess, within statistical limits, the likelihood that a fingerprint under consideration does not correspond to a print known to the system by a simple analysis of the sum of the differences between the individual, normalised intensity sample values of the considered print and the known print.

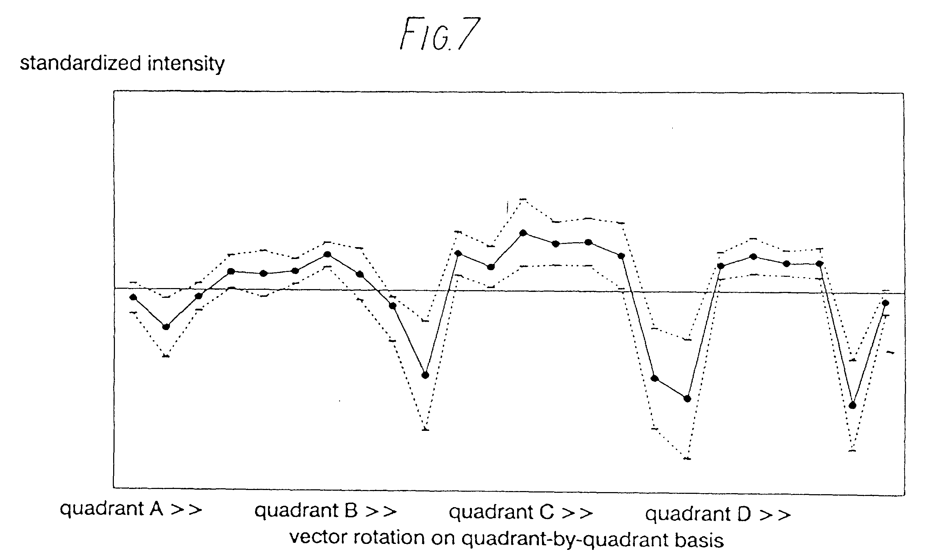

Figure 7 illustrates another plot of standardised intensity profiles together with the associated ±2 S.D. confidence interval on a quadrant-by-quadrant basis; these results were obtained by the same method as those for Figure 6, except that they are representive of a different fingerprint image.

A technique by which stored data (i.e. Figure 6) is compared with data under test (i.e. Figure 5) will now be described:

The standardised intensity difference between the first element of the test data and the first element of the sample data is determined, and this value is divided by the standard deviation of the first element of the stored data, the resultant value then being squared.

The same procedure is then repeated for the remaining 23 elements of data.

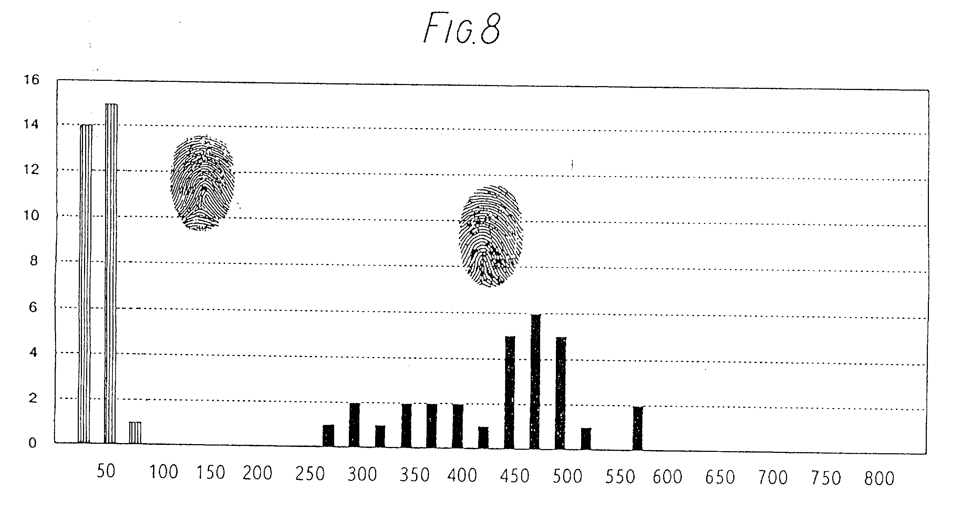

The 24 resultant squared values are then summed to produce a final value which is used as a statistical comparison between the stored data and the data under test. This is detailed in Figure 8.

The ordinate of Figure 8 represents the number of occurrences of the final value for comparison for each of the two sets of data, whilst the abscissa represents the final value, partitioned into discrete intervals.

It will be seen that the image of the fingerprint on the left hand side of Figure 8 (which produced the stored data) results in a final value in the range 0 to 25 for 14 of the 30 samples; a final value in the range 25 to 50 for 15 of the 30 samples; and a final value in the range 50 to 75 for 1 of the 30 samples. This produces an average final value of approximately 22.

Similarly, the image of the fingerprint on the right hand side of Figure 8 (which produced the data under test) yields an average final value of approximately 438.

Referring once more to the statistical analysis of the stored data, the derived final value having a confidence level of 95% is approximately 39.4. Hence, when testing data, derived final values of greater than 39.4 (i.e. the image of the fingerprint on the right hand side of Figure 8) indicate that such a print image probably does not derive from the same finger as the stored data. Conversely, when the final value is less than 39.4 (i.e. the image of the fingerprint on the left hand side of Figure 8) it is likely that the two print images do derive from the same finger.

Furthermore, because the value of probability is logarithmically related to the final value, when the derived final values are considerably removed from 39.4 (i.e. by more than a few units) then the certainty of derivation from the same or different fingerprints is increased. Hence, in the present examples, a final value of 22 corresponds to a confidence level of >99%; whereas a final value of 438 corresponds to a confidence level of <<99.999%.

Clearly, other statistical methods and/or forms of data processing can be applied to the data to enhance the ability of the system to discriminate between fingerprints, and to ascertain match as well as mismatch of fingerprints.

It will be realised that the effects of an angular misalignment of the finger would be merely to move the intensity distributions between quadrants. This may be compensated for by suitable electronic processing means, which would be readily apparent to a person skilled in this art and which, therefore, will not be described in the present specification.

It will be appreciated that whilst in the example described herebefore, the stored data is representative of the autocorrelation pattern observed when the mutual-displacement vector between the two images is rotated, alternative and suitable autocorrelation data may be produced by linear displacements of the two images, as, for example, described in relation to Figure 1.

It will be appreciated by those skilled in the art that any suitable method for producing an autocorrelation pattern may be employed, for example, the image of the fingerprint may be produced as an ink-on-paper image, or by pressing the finger onto a transparent tape or surface of a prism or the like.

In the example herebefore, the image of the fingerprint under consideration is divided into quadrants about its centre, as shown in Figure 2. Overlying the replicant image on to the original is achieved by a logical shift-and-combine operation, using the logic "OR" operation to combine the original and replicant images. It will be apparent that alternatives, such as "AND" or "XOR" (exclusive-OR) operations are equally viable.

The image intensities produced by autocorrelation in the above example have been calculated by reference to the total number of reference points in each quadrant being in an "ON" state (i.e. white; not black).

The image intensities may be measured by any suitable means, for example a quadrant photodiode, CCD camera or the like.

It will be understood that when a series of autocorrelated image pairs are produced in accordance with the above, then because the replicant image is caused to be succesively displaced by, desirably, half an inter-ridge spacing, there will be formed a small edge overlap area on the periphery of the combined image pair (and associated underlap area on the opposite edge). These areas, not containing any interference domains, are redundant for the purposes of producing comparison data, yet contribute a small cyclical variation to the intensity variations during the rotation of the mutual displacement vector. Hence it has been found advantageous to "crop" the edges of the autocorrelation pattern by bounding or framing the pattern so as to be marginally smaller than - and centred on - each image pair. This effectively masks the edge of the image, removing a small area around the periphery.

Because the characteristic fingerprint resultant data is obtained by means of autocorrelation, it can be seen that the method so used is not unduly sensitive to imperfections present in either the original fingerprint or the proferred fingerprint - such as would be caused by scars or dirt marks. This is in contrast to prior art systems, which directly compare images of actual fingerprints. The reason for this is that the technique in accordance with the invention produces data only indicative of the autocorrelation pattern, the effect of such a blemish on the light intensity profiles would be to reduce slightly the amplitude of the local autocorrelation intensity profiles and perhaps shift the position of the peaks.

Although it is not critical for the fingerprint image to be exactly central within the quadrant, the reproducibility of the four intensity profiles are position-dependent to some extent. The required positioning of the finger may be achieved by a mechanical finger-guide or the like. Such a finger-guide is advantageously employed in the present invention and provides improved consistency in both the alignment and the area of the image under consideration. The effects of both the finger-guide and the bounding of the autocorrelation patterns are clearly shown in Figures 4.

It will further be appreciated that although, as described by way of example, the present invention teaches a technique of fingerprint characterisation for use in access control systems, the technique so described is versatile enough to be employed for any purpose which requires recognition of fingerprint characteristics including, for example, criminal identification. The technique is thought, however, to have particular applications in security systems, and will find particular application as an alternative to the use of PIN numbers on credit cards. Data indicative of the autocorrelation pattern produced from the fingerprint of an authorised user will be stored on the credit card magnetic stripe, it then being necessary for the user to generate a further autocorrelation pattern directly from his fingerprint which corresponds to the stored data whenever he wishes to use the credit card.

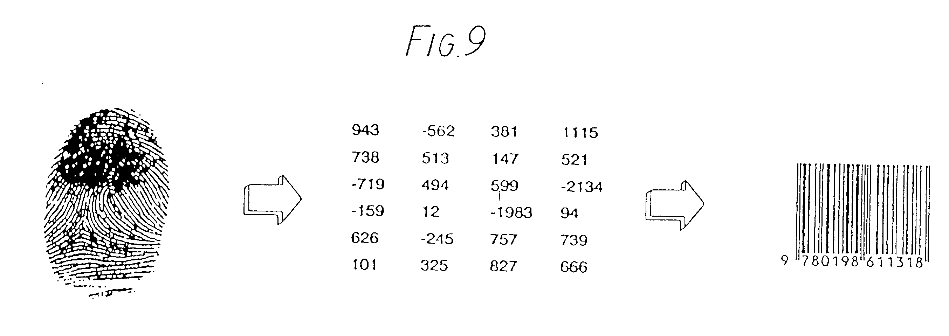

Figure 9 illustrates alternative ways of representing the generated data indicative of an autocorrelation pattern. The data may also be represented as an array of numbers, or as a bar-code or the like.

It will be appreciated that the comparison of the stored and preferred autocorrelation patterns may be performed by any suitable means, e.g. optically or electronically.

It will also be appreciated that in the example given herebefore, comparison may be made between not solely one image of a fingerprint under test and one known print whose data is stored, but data of an image of a fingerprint under test may be compared with a plurality of stored data in order to ascertain if the image under test compares favourably with a set of data held in store.

## Claims

1. Apparatus for characterising an image of a fingerprint under test to determine whether the fingerprint under test matches a previously characterised fingerprint, the apparatus comprising:
A fingerprint capturing means for generating an image of the fingerprint under test, comprising a receiving surface (2) adapted to be contacted by a finger bearing the fingerprint under test and an illumination device (6) for illuminating said surface;
Transducer means (10) optically coupled to said capturing means for receiving said image and for generating electrical signals representative of said image;
Storage means (16), connected to the transducer means, for storing said electrical signals as a binary image of the fingerprint; and characterised by:
Replicating means (18) for producing a replica of the binary image;
Combining means for effectively overlaying the replica on the binary image with application of a number of displacement vectors, and multiplying the two images so as to generate a combination pattern each displacement vector having a fixed modulus (r) bearing a predetermined relationship to the mean inter-ridge spacing of the fingerprint and one of a predetermined number of vector-arguments in incremental steps;
Sampling means for sampling the collective values of each of a plurality of independent sectors of the combination pattern, constituting collectively substantially the entire combination pattern, at each incremental step to obtain a set of data indicative of the optical intensity variations at each sector as a function of the incremental steps of the vector argument; and
Storing means for storing the sets of data.

2. Apparatus according to claim 1 characterised in that the sectors are quadrants.

3. Apparatus according to either of claims 1 or 2 characterised in that the incremental steps are each thirty degrees.

4. Apparatus according to any preceding claim characterised by retrieval means for retrieving sets of data obtained from a further fingerprint for comparison with the sets of data obtained from the first-mentioned fingerprint to determine whether the compared sets of data were obtained from the same fingerprint.

5. Apparatus according to claim 4 wherein said previously characterised fingerprint is one of a plurality of previously characterised fingerprints.

6. Apparatus according to any preceding claim characterised by masking means for masking an edge of said combination pattern.

7. Apparatus according to any preceding claim characterised in that said displacement modulus is constant and said incremental steps are periodic and regular.

8. Apparatus according to any preceding claim characterised in that said predetermined relationship is one half of the mean inter-ridge spacing.

## Patentansprüche

1. Gerät zur Charakterisierung des Abbildes eines zu untersuchenden Fingerabdrucks zur Bestimmung, ob der zu untersuchende Fingerabdruck mit einem zuvor charakterisierten Fingerabdruck übereinstimmt, wobei das Gerät umfaßt:
Fingerabdruck-Aufzeichnungsmittel zur Erzeugung eines Abbildes des zu untersuchenden Fingerabdrucks umfassend eine Aufnahmefläche (2), die zur Kontaktaufnahme mit einem den zu untersuchenden Fingerabdruck tragenden Finger vorgesehen ist und eine Beleuchtungsvorrichtung (6) zur Beleuchtung dieser Fläche;
Wandlermittel (10), die mit den Aufzeichnungsmitteln optisch gekoppelt sind zum Empfangen des Abbildes und zum Erzeugen das Abbild repräsentierender elektrischer Signale;
mit den Wandlermitteln verbundene Speichermittel (16) zum Speichern der elektrischen Signale als binäres Abbild des Fingerabdrucks; und gekennzeichnet durch:
Replizierungsmittel (18) zum Erzeugen einer Replizierung des binären Abbildes;
Kombiniermittel zur effektiven Überlagerung der Replizierung über das binäre Abbild unter Anwendung einer Anzahl von Verschiebevektoren und Vervielfältigen der beiden Abbilder, um so ein Kombinationsmuster zu erzeugen, wobei jeder Verschiebe-Vektor einen festen Modul (r) aufweist, mit einem vorbestimmten Verhältnis zu dem mittleren Zwischen-Rippen-Abstand des Fingerabdrucks und einem von einer vorbestimmten Anzahl von Vektorargumenten in inkrementalen Schritten;
Sampling-Mittel zum Samplen der kollektiven Werte von jedem von einer Mehrzahl unabhängiger Sektoren des Kombinationsmusters, das kollektiv im wesentlichen das gesamte Kombinationsmuster bildet, bei jedem inkrementalen Schritt, um einen Datensatz zu erhalten, der die optischen Intensitätsschwankungen bei jedem Sektor in Abhängigkeit der inkrementalen Schritte des Vektorarguments angibt; und
Speichermittel zum Speichern der Datensätze.

2. Gerät nach Anspruch 1, dadurch gekennzeichnet, daß die Sektoren Quadranten sind.

3. Gerät nach einem der Ansprüche 1 oder 2, dadurch gekennzeichnet, daß die inkrementalen Schritte jeweils dreißig Grad betragen.

4. Gerät nach einem der vorhergehenden Ansprüche, gekennzeichnet durch Wiedergewinnungsmittel zum Wiedergewinnen von Datensätzen, die von einem weiteren Fingerabdruck stammen, zum Vergleich mit den Datensätzen, die von dem erstgenannten Fingerabdruck stammen, um zu bestimmen, ob die verglichenen Datensätze von demselben Fingerabdruck stammen.

5. Gerät nach Anspruch 4, wobei der zuvor charakterisierte Fingerabdruck einer von einer Vielzahl von zuvor charakterisierten Fingerabdrücken ist.

6. Gerät nach einem der vorhergehenden Ansprüche, gekennzeichnet durch Maskiermittel zum Überdecken eines Randes des Kombinationsmusters.

7. Gerät nach einem der vorhergehenden Ansprüche, dadurch gekennzeichnet, daß der Verschiebe-Modul konstant ist und die inkrementalen Schritte periodisch und regelmäßig sind.

8. Gerät nach einem der vorhergehenden Ansprüche, dadurch gekennzeichnet, daß das vorbestimmte Verhältnis die Hälfte des mittleren Zwischen-Rippen-Abstands beträgt.

## Revendications

1. Appareil destiné à caractériser une image d'une empreinte digitale en cours de test afin de déterminer si l'empreinte digitale en cours de test concorde avec une empreinte digitale caractérisée précédemment, l'appareil comprenant:
◆ un moyen de saisie d'empreinte digitale pour engendrer une image de l'empreinte digitale en cours de test, comprenant une surface réceptrice (2), apte à ce qu'un doigt portant l'empreinte digitale en cours de test soit amené à son contact, et un dispositif d'éclairage (6) pour éclairer ladite surface;
◆ un moyen transducteur (10) couplé optiquement audit moyen de saisie pour recevoir ladite image et pour engendrer des signaux électriques représentatifs de ladite image;
◆ un moyen de mémoire (16) connecté au moyen transducteur pour mémoriser lesdits signaux électriques sous forme d'image binaire de l'empreinte digitale; et caractérisé par:
◆ un moyen de reproduction (18) pour produire une réplique de l'image binaire;
◆ un moyen de combinaison pour superposer effectivement la réplique de l'image binaire, avec application d'un certain nombre de vecteurs de décalage, et pour multiplier les deux images de façon à engendrer par étapes incrémentales une configuration de combinaisons, chaque vecteur de décalage ayant un module (r) fixe dont la relation avec l'espacement moyen entre crêtes de l'empreinte digitale est prédéterminée, et un argument qui fait partie d'un nombre déterminé d'arguments de vecteurs;
◆ un moyen d'échantillonnage pour échantillonner, à chaque étape incrémentale, les valeurs collectives de chacun des secteurs d'une série de secteurs indépendants de la configuration de combinaison, qui constituent de façon collective sensiblement toute la configuration de combinaison, afin d'obtenir un ensemble de données indicatives de variations d'intensité optique à chaque secteur en fonction d'étapes incrémentales de l'argument de vecteur; et
◆ un moyen de mémoire pour mémoriser les ensembles de données.

2. Appareil selon la revendication 1 caractérisé en ce que les secteurs sont des quadrants.

3. Appareil selon la revendication 1 ou 2, caractérisé en ce que les étapes incrémentales sont de trente degrés chacune.

4. Appareil selon une revendication précédente quelconque, caractérisé par un moyen de restitution pour restituer des ensembles de données obtenues à partir d'une autre empreinte digitale, en vue de les comparer aux ensembles de données obtenues de l'empreinte digitale mentionnée en premier lieu afin de déterminer si les ensembles comparés de données ont été obtenus à partir de la même empreinte digitale.

5. Appareil selon la revendication 4 dans lequel ladite empreinte digitale précédemment caractérisée est une empreinte d'une série d'empreintes digitales précédemment caractérisées.

6. Appareil selon une revendication précédente quelconque caractérisé par un moyen de masquage pour masquer un bord de ladite configuration de combinaison.

7. Appareil selon une revendication précédente quelconque caractérisé en ce que ledit module de décalage est constant et lesdites étapes incrémentales sont périodiques et régulières.

8. Appareil selon une revendication précédente quelconque caractérisé en ce que ladite relation prédéterminée est une moitié de l'espacement moyen entre crêtes.
